# EUROPÄISCHE PATENTSCHRIFT

(11) **EP 2 130 109 B1**
(45) Veröffentlichungstag und Bekanntmachung des Hinweises auf die Patenterteilung: **05.12.2018**
(21) Anmeldenummer: 08734782.9
(22) Anmeldetag: 26.03.2008
(51) Int. Cl.: G06F 3/01, G06F 1/16, G06F 3/044, G06F 3/0346, G06F 3/0354

(54) **MOBILES KOMMUNIKATIONSGERÄT UND EINGABEEINRICHTUNG HIERFÜR**
MOBILE COMMUNICATION DEVICE AND INPUT DEVICE FOR THE SAME
APPAREIL DE COMMUNICATION MOBILE ET DISPOSITIF D'ENTRÉE POUR CET APPAREIL DE COMMUNICATION MOBILE

(30) Priorität: 26.03.2007 DE 102007016408
(43) Veröffentlichungstag der Anmeldung: 09.12.2009
(73) Patentinhaber: Microchip Technology Germany GmbH, 82205 Gilching (DE)
(72) Erfinder: RICHTER, Wolfgang, 82319 Starnberg (DE); AUBAUER, Roland, 81543 München (DE)
(74) Vertreter: sgb europe
(86) Internationale Anmeldenummer: PCT/EP2008/002384
(87) Internationale Veröffentlichungsnummer: WO 2008/116642

(56) Entgegenhaltungen:
- WO-A-2006/107245
- US-A1- 2006 161 871
- US-A1- 2006 267 966
- US-A1- 2008 059 915

## Beschreibung

Die Erfindung bezieht sich auf ein mobiles Kommunikationsgerät sowie auch auf eine zur Bedienung dieses Kommunikationsgerätes vorgesehene Eingabeeinrichtung, über welche im Rahmen der Benutzung des Kommunikationsgerätes erforderliche Eingabeoperationen abwickelbar sind.

Weiterhin richtet sich die Erfindung auch auf ein Verfahren zur Bewerkstelligung von Eingabeoperationen an mobilen elektronischen Kleingeräten wie den genannten Mobiltelefonen und Digitalkameras.

Mobiltelefone und Digitalkameras sind typischerweise mit Tastenfeldern und/oder Eingabeknöpfen sowie gegebenenfalls auch mit Touch-Screen Eingabeeinrichtungen ausgestattet, durch welche die zur Bedienung dieser Geräte erforderlichen Eingabeoperationen abgewickelt werden können.

Berührungslose Eingabesysteme sind aus den US Patentveröffentlichungen US 2006/0161871 und US 2008/0059915 bekannt. Weitere Displaysteuerungen sind aus der internationalen Anmeldung WO2006/107245 und der US2006/0267966 bekannt.

Insbesondere bei äußerst kleinbauenden Ausführungsformen dieser Geräte besteht das Problem, dass die Abwicklung der Eingabevorgänge zum Teil ein erhebliches Maß an feinmotorischer Koordination erfordert, das von bestimmten Anwendern oder in zahlreichen Situationen nur bedingt erbracht werden kann oder in bestimmten Anwendungssituationen zu Lasten der Aufmerksamkeit für anderweitige Vorgänge geht.

Unter dem Eindruck dieses Problems liegt der Erfindung die Aufgabe zugrunde, Lösungen zu schaffen, durch welche es möglich wird, insbesondere bei relative kompakten, mobilen Elektronikgeräten, insbesondere Kommunikationsgeräten und Digitalkameras, diese Eingabeoperationen in einer für den Anwender besonders gut koordinierbaren Weise abzuwickeln.

Gemäß einem ersten Aspekt der vorliegenden Erfindung wird diese Aufgabe erfindungsgemäß durch ein mobiles Kommunikationsgerät mit den in Patentanspruch 1 angegebenen Merkmalen gelöst.

Dadurch wird es auf vorteilhafte Weise möglich, bereits durch relativ grobmotorische Bewegung der zur Abwicklung der Eingabeoperation vorgesehenen Bedienhand die erforderlichen filigranen Eingabevorgänge vorteilhaft abzuwickeln.

Gemäß einem besonderen Aspekt der vorliegenden Erfindung ist die Steuereinrichtung derart konfiguriert, dass die über die anwenderseitig abgewickelten Steuerbewegungen generierten Eingabeereignisse in der über das Display dargestellten Benutzeroberfläche ihren Niederschlag finden. So ist es insbesondere möglich, über die Benutzerfläche Cursorstrukturen oder anderweitige Symbole anzuzeigen, oder Grafikeffekte zu generieren deren Präsenz oder Bewegung mit der Eingabebewegung des Anwenders korrespondiert.

Die Benutzeroberfläche kann dabei insbesondere so gestaltet sein, dass über eine Querbewegung der Eingabehand verschiedene, in der Benutzeroberfläche visualisierte Buttons oder Felder selektiert werden können. Die Benutzeroberfläche kann weiterhin auch so gestaltet werden, dass zusätzlich zu der Auflösung der Querbewegung auch die Längsbewegung sowie vorzugsweise auch noch die Tiefenbewegung erfasst werden kann. Durch die Erfassung der Quer- und Längsbewegung wird es möglich, sich zweidimensional in einem bestimmten Menüfenster zu bewegen. Durch die Detektion der Tiefenbewegung wird es möglich, insbesondere Zugang zu unterschiedlichen Menüfenstern zu erlangen. Die Benutzeroberfläche kann weiterhin so gestaltet werden, dass die Selektionsvorgänge durch markante Handbewegungen, insbesondere durch markante Änderungen der Z-Achseninformationen generiert werden. Weiterhin ist es auch möglich, bestimmte Gesten zu detektieren, und die Selektion der Benutzeroberfläche, oder auch bestimmte anderweitige Befehle aus diesen Gesten abzuleiten.

Gemäß einem besonderen Aspekt der vorliegenden Erfindung ist das System vorzugsweise so konfiguriert, dass der Operationsbereich wenigstens hinsichtlich seiner Breite und/oder Höhe größer ist als die Breite und/oder Höhe der über das Display wiedergegebenen Grafikoberflächen, sowie vorzugsweise auch größer ist als das Kommunikationsgerät an sich.

Über die Längs- und Querbewegungen kann vorzugsweise innerhalb eines Fensters oder eines Frames navigiert werden. Das System kann weiterhin so gestaltet sein, dass anhand der Detektionsereignisse ein Selektionsbefehl hergeleitet wird.

Dieser Selektionsbefehl kann insbesondere durch eine Fingergeste, insbesondere Abkippen des Zeigefingers oder auch von mehreren Fingern in Richtung zum Display generiert werden. Dieser entsprechende Selektionsbefehl kann aufgrund der für diesen Vorgang typischen, feldelektrischen Änderungen im Detektionsbereich generiert werden. An dem Gerät ist vorzugsweise eine Eingabestruktur vorgesehen, über welche zusätzlich zu der berührungslosen Handbewegungsgesten-basierten Eingabeoperation auch noch eine Menüpunktselektion durch entsprechende Betätigung dieser Eingabestruktur, insbesondere Eingabeknöpfe, erfolgen kann.

Diese Eingabestruktur kann als Tastenstruktur ausgeführt sein, die bei bestimmungsgemäßem Ergreifen des mobilen Kommunikationsgerätes, insbesondere durch den Daumen und die Finger der linken Hand des Anwenders (Rechtshänderausführung), oder durch entsprechend Daumen und Finger der rechten Hand (Linkshänderausführung), betätigt werden kann.

Insbesondere ist es möglich, diesen Selektionsknopf so anzuordnen, dass dieser in ergonomisch vorteilhafter Weise durch den Daumen oder den Zeigefinger betätigt werden kann.

Das erfindungsgemäße Kommunikationsgerät kann so gestaltet sein, dass die Detektion der Eingabeoperationen auf feldelektrischem Wege erfolgt. Dabei ist es insbesondere möglich, den Körper des Anwenders als solchen in das Signalübertragungssystem einzubinden, indem beispielsweise durch die Rückseite des Kommunikationsgerätes in den Anwender ein Verschiebestromereignis eingekoppelt wird das durch entsprechende Modulation der Spannung an im rückwärtigen Bereich des Gerätes vorgesehenen Elektroden herbeigeführt wird. Die Rückführung dieses Verschiebestromereignisses in den vor der Displayeinrichtung des Kommunikationsgerätes liegenden Bereiches kann dann durch in das mobile Kommunikationsgerät integrierte Detektionselektroden wieder erfasst werden.

Es ist gemäß einem besonderen Aspekt der Erfindung weiterhin auch möglich, das mobile Kommunikationsgerät bzw. die Kamera so zu gestalten, dass im Rahmen der Abwicklung der Eingabeoperationen ein akustisches Feedback, beispielsweise durch Generierung schalttypischer Geräusche (Tastaturgeräusche), oder gegebenenfalls auch ein haptisches Feedback durch entsprechende, mit Beschleunigungsmassensystemen ausgestatteten Aktoren erzeugt wird. Über die Displayeinrichtung oder auch weitere optische Mittel, insbesondere Leuchtdioden, können zusätzliche optische Informationen, z.B. Feedbackinformationen über abgewickelte Eingabevorgänge generiert werden.

Die gesamte signaltechnische Struktur kann so konfiguriert sein, dass die Bewegung bzw. Umsetzung der Eingabeoperationen auch sog. ballistische Effekte berücksichtigt, sodass durch rasche Verlagerung der Operationshand der Cursor in dem entsprechenden Fenster größere Strecken zurücklegt und entsprechend in einer ballistischen Funktion (also nach Maßgabe eines negativen Beschleunigungsfaktors a verzögert) ausläuft. Vorzugsweise ist das Detektionsfeld derart dimensioniert, dass dieses einen Bereich von ca. 23 x 23 cm abdeckt, da in diesem Bereich eine besonders rasche Bewegung der Operationshand durch Kippung im Handgelenkbereich und leichte Drehung um das Ellenbogengelenk erreicht werden kann.

Es ist in vorteilhafter Weise möglich, in das mobile Kommunikationsgerät ein Spracherkennungssystem einzubinden über welches eine Erkennung und Umwandlung von Sprachsignalen in Text erfolgen kann. Dieser Text kann dann beispielsweise als Inhalt von e-mails oder SMS kostengünstig übermittelt werden.

Gemäß einem besonderen Aspekt der vorliegenden Erfindung wird dieses Spracherkennungssystem zur Konversion und Erkennung der Gesten verwendet. Die Erfindung richtet sich insoweit auch auf ein Verfahren zur Abwicklung einer Signalverarbeitung von Eingangssignalen die als solche nach Maßgabe von Hand-Gesten generiert werden die seitens eines Anwenders gegenüber einem in das mobile Kommunikationsgerät eingebundenen Detektionssystem vollführt werden und mit der räumlichen Bewegung der Hand oder deren Finger korrelieren, wobei die Eingangssignale derart generiert oder transformiert werden, dass diese Transfersignale darstellen, deren Frequenzband das Frequenzband der einem Spracherkennungssystem zugänglichen Klangsignale erfasst, wobei die Interpretation der Hand-Gesten über das Spracherkennungssystem auf Grundlage jener Transfersignale erfolgt.

Dadurch wird es auf vorteilhafte Weise möglich, unter Rückgriffnahme auf bewährte und für den Bereich der Spracherkennung entwickelte Schaltungs- und Auswertungssysteme auch eine Gestenerkennung und Auswertung vorzunehmen. Es sind hierbei Anwendungen möglich, bei welchen die für Spracherkennung entwickelten Konzepte und Chipsätze ausschließlich zur Gesteninterpretation verwendet werden. Weiterhin ist es möglich, Spracherkennungssysteme zusätzlich mit der Funktion der Gestenerkennung auszustatten, wobei der Mikrophoneingang auch unmittelbar als Eingang für die Gestensignale fungieren kann. Das erfindungsgemäße Konzept der Umwandlung von Gestenbahnverläufen in klangartige Sequenzen kann bei verbreiteten Rechnersystemen und anderen Systemen in denen Spracherkennung implementiert werden kann, insbesondere Mikrocontrollern unter relativ geringem Aufwand an Zusatzhardware realisiert werden. Die erfindungsgemäß generierten klangartigen Sequenzen können so generiert werden, dass diese ggf. in Überlagerung mit Mikrofonsignalen in den akustischen Eingang des Systems eingekoppelt werden. Durch dieses Konzept wird es möglich, Spracherkennungsprogramme auf besonders vorteilhafte Weise um Gesteninterpretationsfunktionen zu erweitern. Die zur Gestenaufzeichnung, bzw. zur Erfassung der räumlichen Bewegung der Gestenhand, oder ggf. auch lediglich von Fingern vorgesehenen Erfassungselektroden können insbesondere in das Gehäuse des Mobilen Kommunikationsgeräts, oder eine Headset oder eine Freisprechanlage, oder ein Telefonpheriperiesystem eingebunden so das ein typischer Bezugspunkt für eine Gestenerfassung gegeben ist. Im Bei Fahrzeugfreisprecheinrichtungen eignen sich hierbei insbesondere Strukturen im Bereich des Armaturenbretts, des Lenkrads, der Mittelkonsole und der Türverkleidungen.

Die erfindunggemäße Sensoreinrichtung kann auch so gestaltet sein, dass durch diese überwiegend statische Gesten, z.B. statische Handformen erfasst und in hierfür hinreichend eindeutige Klangsequenzen konvertiert werden können. Derartige statische Gesten können beispielsweise als "flache Hand", "Faust mit ausgestrecktem Daumen", "Victory Zeichen" ausgeführt werden. Bei diesen statischen Gesten kann anhand der während der statischen Phase generierten Sensorsignale eine bestimmte Klangsequenz generiert werden. Es ist auch möglich, den für den Aufbau und den Abbau der statischen Gesten typischen Bewegungsvorgang klanglich abzubilden und bei der Erkennung dieser Gesten zu berücksichtigen.

Über die Konvertierung der mit der Geste korrelierenden Bahnverlaufssignale in klangartige Signalsequenzen wird auch eine Übermittlung der Gesteninformationen über Telekommunikationssysteme und VOIP-Systeme innerhalb des Klangdatenfrequenzbereiches ermöglicht. Die Gesteninformationen können damit unter Nutzung von Sprachübertragungssystemen auch an einem vom Operator, d.h. dem gestikulierenden Anwender entfernten Ort zur Verfügung gestellt werden. Durch das erfindungsgemäße Konzept kann auch eine Konversion oder Übermittlung einer Handgestensprache in eine klangbehaftete Sprache erfolgen.

Erkennungsmuster für die einzelnen Gesten können durch Teachverfahren, oder auch zu bestimmten Bahnverläufen errechnet und zur Auswertung hinterlegt werden.

Erfindungsgemäß werden Gesten, die von Lebewesen stammen (vorzugsweise Menschen) mit Hilfe eines Detektors erfasst und in Tonfolgen (Klang-Sequenzen) konvertiert. Diese können dann mit aktuellen Methoden der Sprach- oder Tonfolgenverarbeitung analysiert und ausgewertet werden. Verbal gesprochene Kommandos können ggf. parallel hierzu über den gleichen Kanal in dieselbe Verarbeitung gelangen und lassen sich mit den Gesten zusammen, einzeln oder nacheinander auswerten.

Vorzugsweise werden die von der Gestenerkennungsschaltung generierten Tonsequenzen im gleichen Frequenzband wie die Spracheingabe erzeugt, sodass auch die in der Sprachverarbeitung vorhandenen Filtermethoden benutzt werden können. Es ist jedoch auch möglich, einen anderen, beispielsweise zum Randbereich des verarbeiteten Frequenzbereichs hin versetzten Frequenzbereich zu wählen. Ähnlich oder genauso wie Sprachkommandos lassen sich dann Gesten in das System eintrainieren und bei deren Wiederkehr in Funktionen ausführen, die z.B. in einer Tabelle gespeichert wurden. So lässt sich bis auf den Gestentonfolgewandler dieselbe Hard- und Software benutzen wie bei der Sprachverarbeitung, was gegenüber getrennt arbeitenden Systemen einen ökonomischen und schaltungstechnischen Vorteil bedeutet. Die betreffenden Gesten können dabei vor einer Erfassungseinrichtung dreidimensional in einem bestimmten Zeitintervall durchgeführt werden und sind weitgehend bedienerunabhängig.

Grundsätzlich eignet sich das erfindungsgemäße Konzept für verschiedenste Techniken der Gestenerfassung, wie optische, kapazitive oder bildverarbeitende Techniken. Es ist vorteilhaft, wenn die Ermittlung der Gesten in Sequenzen erfolgt und für jede Sequenz ein bestimmter Ton erzeugt werden kann. Somit erzeugt eine einfache oder komplexe Geste eine mehr oder weniger andauernde unterschiedliche Tonfolge. Da nie jemand die gleiche Geste zweimal exakt genau eingeben kann, weist das System vorzugsweise eine tolerante Erkennung auf. Dies geschieht vorzugsweise programmbasiert. Eine hierfür geeignete Software kann erfindungsgemäß unter Nutzung der in Sprachverarbeitungssystemen vorgesehenen Erkennungs- und Interpretationsprozeduren bereitgestellt werden, insbesondere wenn die erfindungsgemäß mit der Geste, insbesondere der Gestenbahn korrelierende Tonfolge eine ähnliche Ausprägung hat wie ein gesprochenes Wort oder ein Satz.

### Aufnahme der Gestensiqnale

Die Aufnahme der Gestensignale erfolgt vorzugsweise mithilfe eines oder mehrerer kapazitiver (E-Feld) Sensoren. Diese Sensoren sind vorzugsweise so aufgebaut, dass diese Veränderungen in einem künstlich erzeugten elektrischen Feld detektieren und hiermit einhergehend Signale liefern die mit der Position oder Bewegung der Hand oder eines Fingers hinreichend eng korrelieren.

Vorzugsweise erfolgt eine Vorverarbeitung der Gestensignale. Diese Vorverarbeitung kann in vorteilhafter Weise auf eine bereits erkannte Geste abgestimmt sein. Die Gestenerfassung kann unter Aufsplitten / Demultiplexen des vom jeweiligen Sensor gelieferten Signals bzw. bei der bevorzugten Verwendung mehrerer Sensoren - der Signale erfolgen.

Die Interpretation der Gesten erfolgt vorzugsweise indem Sensorsignale für mindestens zwei, vorzugsweise drei Raumkoordinaten generiert werden. Diese Sensorsignale werden vorzugsweise in einem mehrkanaligen Messsystem gewonnen, wobei die Sensorsignale mehrkanalig parallel oder im Zeitmultiplex erfasst werden können. Ebenfalls möglich ist eine Anregung des Systems im Zeitmultiplex oder auch Frequenzmultiplex.

Die Umsetzung der trägermodulierten (Elektrodenempfangs) Signale der verschiedenen Sensor-Kanäle kann insbesondere durch Hüllkurvendetektion bzw. Gleichrichtung und Tiefpassfilterung (Bewegungsfrequenz < Tiefpassfrequenz < Trägerfrequenz) in niederfrequente Empfangssignale erfolgen, deren Amplitude proportional zur Annäherung / Entfernung vom Empfangsensor ist.

Es ist möglich, einen Gestenanfang und eine Gestenende mithilfe einer oder Kombinationen der folgenden Verfahren zu erkennen:
a.) Annäherungsdetektion: Als Gesten werden die Signale der E-Feld Sensoren erkannt, bei welchen mindestens ein Sensorsignal einen bestimmten bzw. einen sich adaptiv einstellenden Pegel überschreitet oder unterschreitet.
b.) Bewegungsdetektion: Als Gesten werden Signale der E-Feldsensoren mit einer Mindestveränderungsgeschwindigkeit erkannt. Hierzu ist es vorteilhaft die mathematische Ableitung dieser Signale zu bilden. Alternativ ist es auch möglich eine Hochpassfilterung, die der Ableitung entspricht durchzuführen.
c.) Die vorgenannten Maßnahmen nach a. und b können auch in Kombination durchgeführt werden.

Gemäß einer besonders bevorzugten Ausführungsform der Erfindung erfolgt eine Normierung der Gestensignale. z. B. durch die Subtraktion des zeitlichen Mittelwerts bzw. des Gleichsignalanteils aller Sensorsignale von den jeweiligen einzelnen Sensorsignalen.

Weiterhin ist es möglich, Koordinatentransformation der detektierten Sensorsignale vorzunehmen, so dass die korrespondierenden Gesten in einer räumlichen Referenzebene abgebildet werden.

Diese Referenzgestenebene liegt vorzugsweise im wesentlichen parallel zu den Elektrodenflächen und senkrecht zur Sensorachse, sodass die korrespondierenden Gesten immer in einem bestimmten Abstand zum Sensorursprung abgebildet werden. Der Schwerpunkt der durch die Geste aufgespannten Fläche liegt vorteilhaft auf der Sensorachse.

Die Umsetzung der so transformierten mehrdimensionalen Sensorsignale erfolgt vorzugsweise durch eine Spannungs-Frequenzumsetzung (z.B. VCO) in geeignete Tonfolgen, die im Sprachfrequenzbereich von typischerweise 50Hz - 8000Hz bzw. 300-3400Hz (Telefonbandbereich) liegen, so dass die verschiedenen (typischerweise 3) Sensorsignale in ein einziges auszuwertendes Gestensignal (1 Kanal) überführt werden. Dieses wird dem Gestenerkenner im nächsten Schritt zur Auswertung zur Verfügung gestellt.

Die Sensorsignale können als Zeitmultiplex-Signale generiert werden. Die Umwandlung oder Transformation der Sensorsignale mittels VCO Wandlung führt vorzugsweise zu Signalen in jeweils unterschiedlichen Frequenzbändern im Sprachfrequenzbereich.

### Gestenerkennung

Die Erkennung der Gesten erfolgt vorzugsweise unter Verwendung eines DTW (Dynamic Time Warping) Mustererkenners zur Erkennung gesamter Gesten, analog zur Worterkennung bei Spracherkennern. Diese Erkennertypen zeichnen sich durch eine für zahlreiche Anwendungsfälle ausreichende Trennschärfe gegenüber ähnlich ausgeführter Gesten und damit eine bei einem kleineren Gestenspektrum mit relativ markanten Gesten ausreichende Erkennungsrate aus.

Alternativ zu dem vorgenannten Ansatz der DTW-Mustererkennung ist es auch möglich ein ebenfalls als Spracherkennungskonzept bekanntes Verfahren des Hidden Markov Modell (HMM) Erkenners zu verwenden. Bei dieser Art der Spracherkennung werden Wörter in Phoneme, atomare quasistationäre Laute der Sprache zerlegt. Analog werden Gesten in Gestenfragmente zerlegt, die im HMM durch Zustände repräsentiert werden. Als Gestenfragmente können beliebige Teile einer Geste verwendet werden, also beliebige Gesten vorzugsweise Finger/Hand/Arm . Insbesondere geradlinige oder gekrümmte Bewegungen, Veränderungen der Orientierung (z.B. Drehung der Hand), Veränderungen der Form (wie Öffnen der Hand), sowie jeweils beliebig weit abgeleitete und integrierte Formen dieser Änderungen (Bewegungslängen, -geschwindigkeiten, etc.). Diese Gestenfragmente werden einzeln hintereinander erkannt und von dem HMM Erkenner wieder den definierten (in einem Trainings oder Beschreibungsprozess) Gesamtgesten zugeordnet (für dieses Beispiel: L Geste).

Die erfindungsgemäß als klangartige Signalsequenzen generierten und mit der Handgeste korrelierenden Signale können weiterhin auch durch einen Neuronalen Netzwerkerkenner und Gestenfragment Klassifizierer, analog zur Spracherkennung (Phonem Classifier) ausgewertet werden.

Die vorgenannten Maßnahmen, sowie anderweitige verbreitete Spracherkennungsverfahren können auch in Kombination ausgeführt werden um aus den erfindungsgemäß als klangartige Signalsequenzen generierten Gestensignale auszuwerten und dabei zu interpretieren.

### 3 Unterscheidung von Trainings- und Erkennungsphase,

Die zu erkennenden Gesten werden vorzugsweise mindestens einfach, ggf. auch mehrfach trainiert und im Gestenerkenner als Referenzmuster abgelegt. Gesten gleicher Aussage, die jedoch beim Training als zu unterschiedlich erkannt werden, werden vorzugsweise abgewiesen. Nicht abgewiesene, hinreichend ähnliche und damit eindeutige Gesten können durch Mittelwertbildung der entsprechenden Referenzsignale zusammengefasst werden.

Alternativ zum Trainingsprozess kann auch eine grafische - z.B. Maus/Menuebasierte - Eingabe von Referenzgesten (Pfeil von rechts nach links, oben nach unten, Kreis, usw) erfolgen. Zu diesen eingegebenen Gesten können die entsprechend erwarteten Sensorsignale ermittelt und im Gestenerkenner als Referenzmuster hinterlegt werden.

### Erkennungsphase

Während der Erkennungsphase werden vorzugsweise die Gestensignale mit den im Trainings / Beschreibungsprozess abgelegten Referenzsignalmuster verglichen und die wahrscheinlichste Geste ausgegeben. Falls die Gestensignale zu weit von allen Referenzsignalen abweicht wird ein "nicht erkannt" ausgegeben. Hier kann in Abhängigkeit der Abweichung ein Schwellwert definiert werden, mit dem die Wahrscheinlichkeit für Fehldetektionen (die erkannte Geste wird falsch zugeordnet) und irrtümliche Abweisung (im Englischen Miss) (eine Geste wird nicht erkannt und abgelehnt) je nach Applikation angepasst werden können.

Bei einem HMM Erkenner erfolgt die Suche nach der besten Geste vorteilhaft durch einen Viterbi-Algorithmus.

Durch das erfindungsgemäße Konzept wird es möglich, Gestensignale einem Spracherkennungssystem zuzuführen und auf überraschend wirkungsvolle Weise durch die bereits für die Spracherkennung entwickelten Erkennungsverfahren auszuwerten. Die Sensorik unter Verwendung niederfrequenter elektrischer Felder (E-Feldsensorik) im Bereich bis ca. 100 kHz ermöglicht eine sichere Erkennung von Bewegungen im Abstand von typischerweise bis zu 50cm von den entsprechenden Detektionselektroden.

Für eine räumliche Abbildung der Geste werden vorzugsweise wenigstens drei Elektroden verwendet die beispielsweise drei jeweils mit der Dynamik der Abstandsänderung korrelierende Tonbeiträge liefern. Um insbesondere auch die Form der Hand zu erkennen, und insgesamt die Auflösung zu erhöhen und ggf. eine gewisse Redundanz zu schaffen ist es vorteilhaft mehr als drei Elektroden zu verwenden und damit ein bzgl. der Koordinaten ggf. überbestimmtes System zu schaffen.

Weitere Einzelheiten und Merkmale der Erfindung ergeben sich aus der nachfolgenden Beschreibung in Verbindung mit der Zeichnung. Es zeigt:
- **Figur 1**: eine perspektivische Darstellung eines erfindungsgemäßen, mobilen Kommunikationsgerätes nebst der zur Bewerkstelligung von Eingabeoperationen durch dieses Kommunikationsgerät bereitgestellten virtuellen Eingabeoberfläche,
- **Figur 2**: eine Prinzip-Skizze zur Veranschaulichung des Aufbaus einer zur Detektion der Bewegung der Operationshand gegenüber dem Kommunikationsgerät vorgesehenen Elektrodeneinrichtung,
- **Figur 3**: eine Schemadarstellung zur Veranschaulichung des schaltungstechnischen Aufbaus eines erfindungsgemäßen, mobilen Kommunikationsgerätes;
- **Figur 4**: eine als vorgefertigte Baugruppe ausgeführte erfindungsgemäße Eingabeeinrichtung für ein Kommunikationsgerät die als solche eine dünne Leiterplattenstruktur mit darauf ausgebildeten Elektrodenflächen umfasst, wobei auf dieser Leiterplattenstruktur eine ASIC-Schaltung angeordnet ist, zur Generierung der Steuersignale auf Grundlage der über die Elektrodenflächen detektierten Näherungseffekten.
- **Figur 5**: eine Schemadarstellung zur Veranschaulichung des erfindungsgemäßen Gestenerkennungskonzeptes bei welchem die räumliche Bewegung einer Hand durch drei Sendeelektroden und eine Empfangselektrode erfasst wird und das über die Empfangselektrode erfasste Signal derart generiert oder modifiziert wird, dass dieses über ein Spracherkennungssystem hinreichend eindeutig erkannt werden kann;

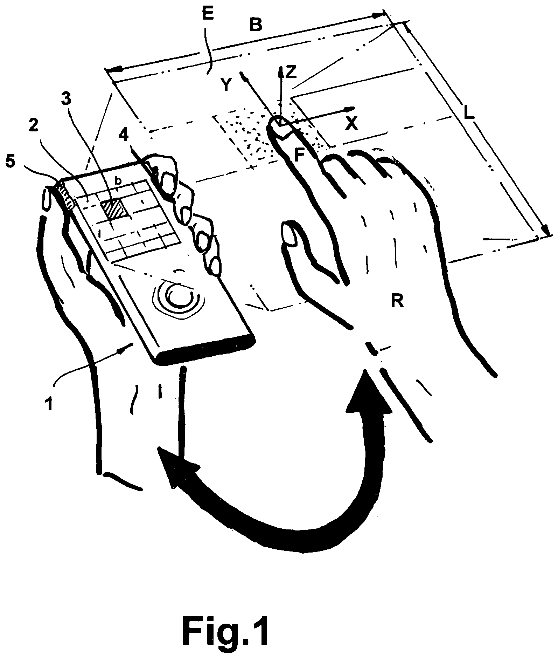

Das in Figur 1 dargestellte, mobile Kommunikationsgerät 1 umfasst eine Displayeinrichtung 2, die bei diesem Ausführungsbeispiel als Flachbildschirm ausgeführt ist. Das mobile Kommunikationsgerät 1 ist bei diesem Ausführungsbeispiel hinsichtlich seiner äußeren Gestaltung an ein hochwertiges, mobiles Kommunikationsgerät, insbesondere I-Phone Telefon, angelehnt. Über das Display 2 wird eine grafische Benutzeroberfläche abgebildet, die als solche mehrere Operationsfenster bietet, wobei innerhalb des jeweiligen Operationsfensters eine zweidimensionale Navigation eines Cursors 3 oder einer anderweitig markant hervortretenden Farbstruktur abgewickelt werden kann.

Das hier gezeigte, mobile Kommunikationsgerät ist derart gestaltet, dass dieses bei gebrauchstypischem Ergreifen bedient werden kann, indem mit der verbleibenden, freien Hand R (hier lediglich beispielhaft die rechte Hand) durch berührungsloses Bewegen der Hand bzw. des ausgestreckten Zeigefingers F auf der hier dargestellten, virtuellen Eingabeebene E, Cursorbewegungen oder Selektionsvorgänge innerhalb der über das Display 2 bereitgestellten Benutzeroberfläche abgewickelt werden können. Bei dem hier gezeigten Ausführungsbeispiel ist die Systemabstimmung so festgelegt, dass die Breite B sowie die Länge L der virtuellen Eingabeebene E größer ist als die Breite b und die Länge I der Displayeinrichtung 2. Es sind damit Eingabebewegungen möglich, die deutlich größer sind als die Abmessungen des Displays. Die Eingabeeinrichtung des mobilen Kommunikationsgerätes 1 ist weiterhin derart gestaltet, dass Selektionsoperationen, insbesondere durch markante Bewegungen der Operationshand R oder des Fingers F, in einer zur Eingabeebene E normalen Richtung (Z-Richtung) abgewickelt werden können.

Weiterhin ist auch das mobile Kommunikationsgerät 1 mit Eingabeeinrichtungen in Form von Druckknöpfen 4, 5 versehen, über welche weitere Eingabeoperationen veranlasst werden können. Das mobile Kommunikationsgerät 1 ist derart gestaltet, dass über die Displayeinrichtung 2 unmittelbar gezeigt wird, welche Positionierung des Cursors 3 innerhalb der Displayeinrichtung 2 durch die momentane Position der Eingabehand R veranlasst wird. Es ist möglich, über die geräteseitig vorgesehenen Druckknöpfe 4, 5 Resetvorgänge vorzunehmen die dazu führen, dass die momentane Position der Operationshand R gegenüber dem mobilen Kommunikationsgerät 1, z.B. als Nullposition interpretiert wird, die beispielsweise dazu führt, dass sich der Cursor 3 im wesentlichen zentral in der Displayeinrichtung 2 befindet. Es ist möglich, das Kommunikationsgerät 1 weiterhin so zu gestalten, dass die Breite B und gegebenenfalls auch die Länge L des zur Generierung der Eingabebefehle herangezogenen, virtuellen Eingabefeldes E durch einen Teachmodus eingelesen werden kann, indem beispielsweise die Operationshand R bei einer bestimmten Tastenkombination, z.B. gleichzeitigem Drücken der Drückknöpfe 4 und 5, zunächst ganz nach links, dann ganz nach rechts, nachfolgend ganz nach oben und abschließend ganz nach unten bewegt wird.

Durch das hier dargestellte, mobile Kommunikationsgerät 1 kann berührungslos und durch relativ grobmotorische Bewegung der Operationshand R in dem virtuellen Eingabefeld E eine zuverlässige und rasch koordinierbare Abwicklung von unmittelbar in der kleinbauend ausgeführten, kompakten Displayeinrichtung 2 wiedergegebenen Eingabeoperationen bewerkstelligt werden.

Die zur Detektion der Bewegung der Operationshand R vorgesehenen Detektionseinrichtungen sind vorzugsweise unmittelbar in die Kommunikationseinrichtung 1 integriert. Diese Detektionseinrichtungen können insbesondere so gestaltet sein, dass die Bewegung und Position der Operationshand R anhand feldelektrischer Wechselwirkungseffekte detektiert wird.

Es ist möglich, nach Maßgabe der Hand- und Fingerbewegung eine Cursorstruktur innerhalb des Wiedergabebereiches der Displayeinrichtung zu bewerkstelligen. Es ist auch möglich, nach Maßgabe der Hand- und Fingerbewegung bestimmte Menuepunkte jeweils in den Zentralbereich der Displayeinrichtung zu bewegen und diese dann bei Eintritt in das Zentralfenster zu selektieren. Es ist auch möglich, diese beiden Ansätze zu kombinieren, so dass z.B. bei Erreichen einer bestimmten Rand-Grenzzone, z.B. einer unter einem Abstand von ca. 20% der Bildflächendiagonale zum Displayrand verlaufenden Grenzlinie ein Bildflächennachlauf erfolgt und dann in dem nachgelaufenen Fenster wieder eine X-Y Navigation und ggf. auch ein Z-Zoom abgewickelt werden kann.

Die Eingabeeinrichtung kann so gestaltet sein, dass diese auch bestimmte Fingergesten interpretiert wie sie sich beim Schreiben auf einer virtuellen Tastatur ergeben. Die Displayeinrichtung 2 kann zusätzlich als Touchscreen ausgeführt sein.

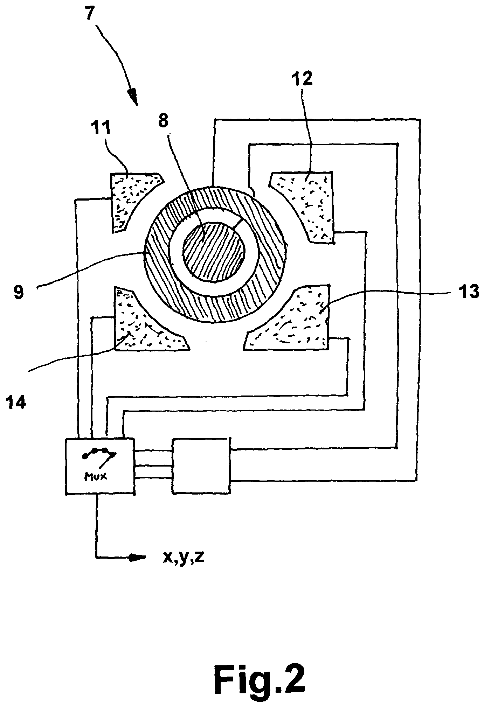

In Figur 2 ist eine Elektrodenstruktur dargestellt, die vorzugsweise unmittelbar unterhalb einer nicht-leitenden Gehäusefläche des Kommunikationsgerätes 1 in Nachbarschaft zur Displayeinrichtung angebracht ist. Durch diese Elektrodenstruktur 7 wird es möglich, die X- und Y-Bewegungen sowie auch die Z-Bewegungen der Operationshand R (Figur 1) gegenüber dem mobilen Kommunikationsgerät 1 zu detektieren und die zur Navigation innerhalb der Benutzeroberfläche erforderlichen X/Y und ggf. Z-Signale zu generieren.

Die Elektrodenstruktur 7 umfasst eine Speiseelektrodeneinrichtung 8, eine Abschirmungselektrodeneinrichtung 9 und mehrere Detektionselektroden 11, 12, 13, 14. Über die Speiseelektrodeneinrichtung 8 wird ein moduliertes E-Feld generiert, das sich in den vor dem Kommunikationsgerät 1 liegenden, der Operationshand R zugänglichen Raumbereich hinein ausdehnt. Durch die Abschirmungselektrodeneinrichtung 9 wird eine unmittelbare feldelektrische Koppelung des durch die Speiseelektrode 8 generierten Feldes mit den Detektionselektroden 11, 12, 13, 14 verhindert. Über die Feldelektroden 11, 12, 13, 14 kann die Position der Operationshand R sowie die Relativbewegung derselben gegenüber der Speiseelektrode 8 detektiert werden. Die Detektionselektroden 11, 12, 13, 14 sind hierzu an eine Auswertungsschaltung angebunden, welche vorzugsweise auf Grundlage mehrerer unterschiedlicher Auswertungskonzepte eine Auswertung der Detektionsereignisse, insbesondere der Stärke des an der jeweiligen Detektionselektrode 11, 12, 13, 14 anliegenden elektrischen Feldes, vornimmt. Die Detektionselektroden 11, 12, 13, 14 bilden vorzugsweise Bestandteile von LC-Netzwerken. Die Auswertungskonzepte können insbesondere die Messung von Strömen, der Spannung, Phasenlagen von Strom und Spannung zueinander, sowie die Phasenlagen gegenüber Erregersystemen, und Kapazitäten in den entsprechenden Abschnitten der LC-Netzwerke beinhalten.

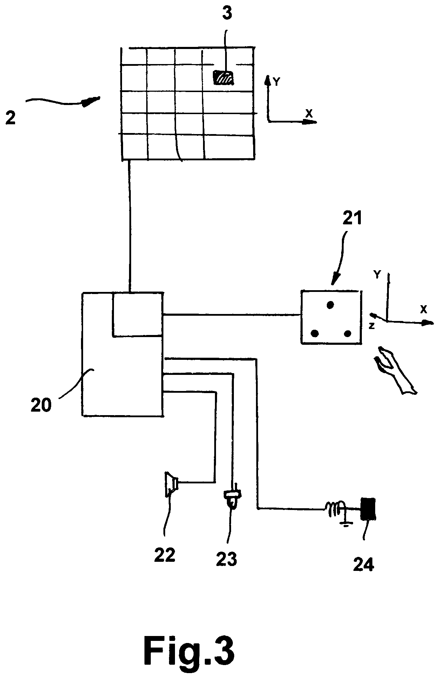

In Figur 3 ist stark vereinfacht der Grundaufbau der zur Abwicklung der Eingabevorgänge vorgesehenen Schaltungsstrukturen des Kommunikationsgerätes 1 dargestellt.

Die Displayeinrichtung 2 wird über die programmierte elektronische Steuereinrichtung 20 angesteuert. Diese Ansteuerung der Displayeinrichtung 2 erfolgt bei dem hier dargestellten Ausführungsbeispiel derart, dass über die Benutzeroberfläche 2 eine für die Abwicklung von Eingabevorgängen vorteilhafte, vorzugsweise intuitiv rasch verständliche Benutzeroberfläche gebildet wird. Diese Benutzeroberfläche kann insbesondere so aufgebaut sein, dass diese mehrere Fenster bildet, wobei zumindest ein Teil dieser Fenster so gestaltet ist, dass in diesen Fenstern eine zweidimensionale Verlagerung einer Cursorstruktur oder entsprechend zweidimensionale anderweitige Navigation möglich ist. Die zur Verlagerung der Cursorstruktur 3 innerhalb der Bildfläche vorgesehenen X/Y Informationen werden erfindungsgemäß durch die unmittelbar in das mobile Kommunikationsgerät 1 eingebundene Detektionseinrichtung 21 generiert. Diese Detektionseinrichtung 21 ist so gestaltet, dass diese die Bewegung einer Operationshand in einem dem mobilen Kommunikationsgerät 1 auf Seiten der Displayeinrichtung vorgelagerten Operationsraum (vgl. Figur 1) ermöglicht. Bei dem hier gezeigten Ausführungsbeispiel ist die Eingabeeinrichtung 21 so gestaltet, dass durch diese die X/Y Bewegung der Operationshand R eines Anwenders gegenüber der Eingabeeinrichtung 21 detektiert. Diese Bewegung wird vorzugsweise unmittelbar durch entsprechende Bewegung der Cursorstruktur 3 in dem Display des mobilen Kommunikationsgerätes 1 veranschaulicht. Das mobile Kommunikationsgerät 1 umfasst bei diesem Ausführungsbeispiel weitere Ausgabestrukturen, wobei diese hierzu eine Lautsprechereinrichtung 22 zur Generierung akustischer Signale, zusätzliche LED Einrichtungen 23 zur Generierung zusätzlicher optischer Signale und vorzugsweise auch einen Impulsaktuator 24 zur Generierung haptischer Signale umfasst. Bei dem hier gezeigten Ausführungsbeispiel führt beispielsweise die Bewegung der Operationshand R gegenüber der Eingabeeinrichtung 21 zu einer Verlagerung der Cursorstruktur 3, in der durch die Displayeinrichtung 2 bereitgestellten Benutzeroberfläche. Bei Selektion entsprechender Menüpunkte wird durch die Lautsprechereinrichtung 2 ein hiermit korrelierendes akustisches Signal, insbesondere ein Tastendrucklaut oder ein durch Sounddesign definiertes Piepsignal, generiert. Über die Leuchtdiodeneinrichtung 23 können ebenfalls bestimmte Gerätezustände, z.B. die Bereitschaft des Gerätes zur Abwicklung von Eingabevorgängen, sowie auch insbesondere bestimmte Menüebenen veranschaulicht werden. So ist es möglich, an dem Kommunikationsgerät 1 eine durch eine LED-Kette generierte optische Laufleiste anzuordnen, sodass anhand dieser optischen Laufleiste unmittelbar angedeutet werden kann, in welcher Benutzerfensterebene sich der Anwender gerade befindet. Diese Benutzerebene kann beispielsweise durch Verändern des Abstands der Operationshand R in Z-Richtung (im wesentlichen senkrecht zur Geräteoberfläche oder senkrecht zur Operationsebene E) abgewickelt werden.

Bei Auswahl bestimmter Tasten innerhalb des graphischen Benutzerfensters kann über die Aktuatoreinrichtung 24 ein kleines Impulsereignis generiert werden, das dem Anwender zusätzlich signalisiert, dass nunmehr ein Menüpunkt gewählt wurde.

Auf Grundlage des erfindungsgemäßen Konzeptes ergibt sich die Möglichkeit, ein lediglich einhändig ergriffenes Mobiltelefon berührungslos durch Vorbeibewegen der verbliebenen freien Hand des Anwenders zu bedienen, wobei ein relativ filigranes Menüfenster mit Zahlen- und Buchstabenfeldern durch eine relativ gut koordinierbare Bewegung der freien Hand des Anwenders gegenüber dem mobilen Kommunikationsgerät und insbesondere ohne dieses hierbei mit der Eingabehand zu berühren abgewickelt werden kann.

Das erfindungsgemäße Konzept ist nicht auf die Anwendung bei Mobiltelefonen beschränkt. Es eignet sich insbesondere auch zur Bedienung von Digitalkameras, Gameboys und Playstations und anderweitigen, leistungsfähigen, elektronischen Kleingeräten, die als solche einhändig ergriffen werden können und typischerweise durch die andere Hand des Anwenders bedient werden.

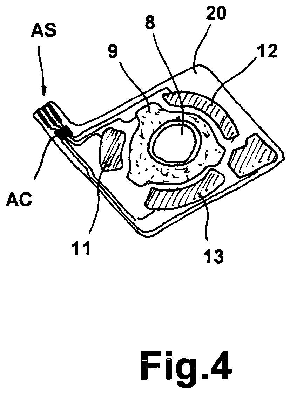

Figur 4 zeigte eine als vorgefertigte Baugruppe ausgeführte erfindungsgemäße Eingabeeinrichtung für ein Kommunikationsgerät nach die als solche eine dünne Leiterplattenstruktur 20 mit darauf ausgebildeten Elektrodenstrukturen 8, 9, 11, 12, 13 umfasst, wobei auf dieser Leiterplattenstruktur eine ASIC-Schaltung AC angeordnet ist, zur Generierung der Steuersignale auf Grundlage der über die Elektrodeneinrichtungen detektierten Näherungseffekte. Diese Steuersignale können in einem genormten Signalstandard, insbesondere USB-Standard über die Anschlussstrukturen AS zur Verfügung gestellt werden.

Es ist möglich, das erfindungsgemäße System zur berührungslosen Gesten- und Handbewegungserfassung auch mit Berührungserfassungssystemen, insbesondere Touch-Screen Systemen zu kombinieren. Auch zusätzliche Eingangsinformationen durch Trägheitssensoren, insbesondere Gyrometer können in Kombination mit dem erfindungsgemäßen Detektionskonzept im Bereich des Handgerätes zur Abwicklung von Eingabeoperationen verarbeitet werden.

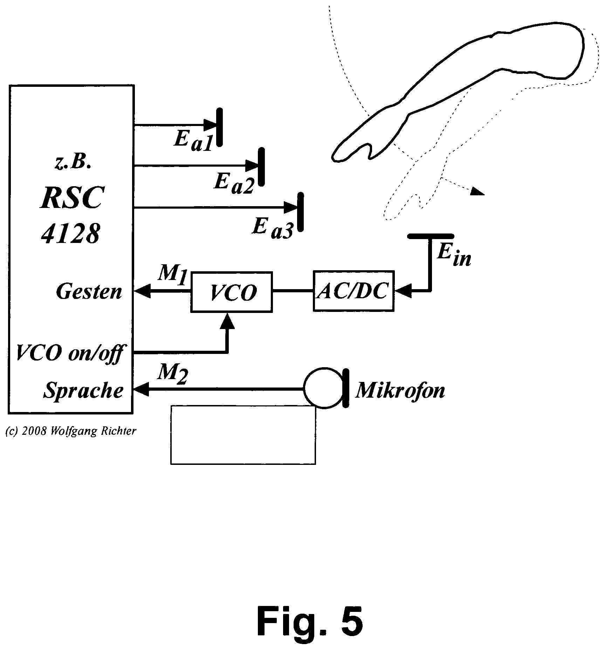

Figur 5 veranschaulicht eine erste Variante einer erfindungsgemäßem Gestenkonversionsschaltung. Ein elektronisches Bauelement, welches für Sprachverarbeitung grundsätzlich geeignet und ausgestattet ist (z.B. der Baustein RSC 4128) beinhaltet einen programmierbaren Controller. Dieser wird per Firmware angewiesen, an mindestens einem IO Port ein wechselndes Signal zu erzeugen (1-0 Folge). Dieses Signal kann entweder optisch, z.B. durch Leuchtdioden, oder auch kapazitiv, z.B. auf eine Koppelfläche, ausgegeben werden. Im letzteren Fall erzeugt es ein elektrisches Wechselfeld. Ein, vorzugsweise mit einem Transimpedanzverstärker ausgestatteter Detektor kann dieses Feld oder eine von der Leuchtdiode stammende Lichtmenge empfangen. Diese wird in eine Gleichspannung gewandelt, die einen spannungsgesteuerten Oszillator **VCO** betreibt. Eine Änderung der Lichtstärke oder des elektrischen Feldes, z.B. durch das Einbringen menschlicher Gliedmaßen in den Erfassungsbereich, ändert die Tonhöhe. Diese kann absinken oder ansteigen. Wird der entsprechende Controllerpin nur kurzzeitig aktiviert (z.B. 40 Millisekunden), so wird auch die Tonänderung nur in dieser Zeit stattfinden. Letztlich kann der betreffende **VCO** über einen anderen IO Pin ein- oder ausgeschaltet werden, sodass im Leerlauf kein Ton hörbar ist. Die durch Annäherung erzeugte Tonfolge wird der eigentlich für die Sprachverarbeitung vorgesehenen Analyseschaltung, die typischerweise aus einer Kombination von Hard- und Software besteht, zugeführt und zwar vorzugsweise im gleichen Chip, der auch das Feld- oder Lichtsignal generiert. Will man mehrere Dimensionen erfassen, so werden erforderlichenfalls mehrere feldgebende Elektroden oder Leuchtdioden vorgesehen. Dies kann mit Hilfe anderer IO Pins desselben Controllers geschehen, die nacheinander (= Sequenz) aktiviert werden können. Alternativ zu den vorgennten Erfassungskonzepten ist es auch möglich, die Geste durch optische-Maussystem oder anderweitige Kameraeinrichtungen, insbesondere eine ggf. in dem Mobiltelefon vorgesehene Kamera zu erfassen.

Die Signalverarbeitung und Auswertung erfolgt erfindungsgemäß durch an sich verbreitete Analysetechniken zur Sprachverarbeitung. Diese Spracherkennungstechniken werden erfindungsgemäß zur Gestenerkennung genutzt indem zunächst in Korrelation mit den Gesten, insbesondere Form des Gestenobjekts (Hand und/oder Finger) Bahnverlauf und Dynamik klangartige, sprachähnliche Signalsequenzen gebildet werden. Die Auswertung dieser klangartigen Signalsequenzen ist vergleichsweise zuverlässig, da die Töne so generiert werden können, dass diese beispielsweise eher wie eine Folge von Vokalen erscheinen und Konsonanten und Zischlaute fehlen können (aber nicht müssen). Damit ist es auch möglich, sprachliche Kommandos und Gestenkommandos miteinander zu mischen und gleichzeitig oder nacheinander auszuführen. Mit Hilfe neuronaler Netze oder anderer lernenden Algorithmen ist es möglich, ein derartiges System zu trainieren und Toleranzschwellen einzustellen.

Bei dem in Figur 5 dargestellten elektronischen Baustein sind an dessen IO Ports beispielsweise drei feldabgebende Elektroden (z.B. Kupferflächen) angekoppelt. In ihrer Nähe befindet sich eine feldaufnehmende Elektrode E-in. Diese ist an einem Buffer (z.B. Transimpedanzverstärker), einer nachfolgenden Gleichrichterschaltung, bestehend aus Diode und Kondensator und einem spannungsgesteuerten Oszillator (VCO, hier ein Nadelimpulsgenerator) dargestellt. Mit Hilfe dieser Schaltung ist es möglich, Tonfolgen (Tonsequenzen) zu generieren, die durch Annähern, vorzugsweise menschlicher Gliedmaßen, in ihrer Höhe verändert werden. Mit Hilfe einer Sequenzerschaltung (Software oder Hardware) werden nun die einzelnen Elektrodenflächen **Ea1** bis **Ea3** nacheinander aktiviert und zwar mit einem Wechselfeld aus 1-0 Folgen zeitlicher Länge, z.B. 100 kHz für jeweils 20 Millisekunden. Es entstehen elektrische Wechselfelder. Das Einbringen von Gliedmaßen kann das Feld abschwächen zur Eingangselektrodenfläche Eᵢₙ oder als Überbrückung wirken. Beide Effekte verändern die Tonhöhe des angeschalteten **VCO.** Dessen Ausgang ist in den Chip zurückgeführt, wo die Sprachverarbeitung integriert ist. Somit lässt sich eine Bewegungsfolge einfach eintrainieren und auswerten. An denselben (oder einen anderen Eingang) kann auch ein Mikrophon angeschaltet werden, welches sprachliche Kommandos auf gleiche Weise verarbeitet.

Die vorliegende Erfindung kann äußerst kostengünstig realisiert werden und ermöglicht bei mobilen Kommunikationsgeräten Sprach- und Gestenerkennung in synergetischer Weise zu realisieren.

## Patentansprüche

1. Mobiles Kommunikationsgerät mit:
einer Gehäuseeinrichtung die derart ausgebildet ist, dass diese einhändig ergreifbar ist,
einer Displayeinrichtung (2), die in die Gehäuseeinrichtung eingebunden ist zur Bereitstellung einer Bildwiedergabefläche,
einer Steuereinrichtung zur Ansteuerung der Displayeinrichtung (2) derart, dass diese in einem Eingabemodus eine Eingabegraphik bereitstellt, die als solche die Abwicklung eines Eingabevorgangs unterstützt, und
einer Eingabeeinrichtung (7) zur Abwicklung des Eingabevorgangs nach Maßgabe von Eingabehandlungen manueller Art, wobei die Eingabeeinrichtung (7) derart ausgebildet ist, dass in einem bei bestimmungsgemäßer Handhabung des Gerätes in einem der Displayeinrichtung (2) vorgelagerten Bereich eine Eingabezone bereitgestellt ist, innerhalb welcher Eingabeoperationen durch einen Anwender abgewickelt werden können indem der Anwender mit seiner freien Hand gegenüber der Gehäuseeinrichtung Steuerbewegungen durchführt ohne hierbei die Displayeinrichtung (2) oder das Kommunikationsgerät (1) mit dieser Hand zu berühren,
wobei das Kommunikationsgerät (1) so gestaltet ist, dass die Länge und die Breite der zur Abwicklung der Eingabeoperationen über die Operationshand (R) vorgesehene Dimension der virtuellen Eingabeebene (E) größer ist als die Länge und die Breite der Displayeinrichtung (2),
**dadurch gekennzeichnet, dass** die Eingabeeinrichtung (7) eine Elektrodenstruktur umfasst zur Detektion der Eingabeoperationen auf Grundlage feldelektrischer Wechselwirkungseffekte,
wobei die Eingabeeinrichtung eine erste, eine zweite und eine dritte Empfangselektrode (11, 12, 13) umfasst, und dass anhand von Unterschieden der an diesen Elektroden (11, 12, 13) anliegenden feldelektrischen Ereignisse die Position der Operationshand (R) und/oder die Quer-, Längs- und/oder Tiefenbewegung der Operationshand (R) gegenüber dem Kommunikationsgerät (1) detektiert wird, und dass die Eingabeeinrichtung eine Anregungselektrode (8) umfasst, die als Sendeelektrode fungiert und in einem dem Kommunikationsgerät (1) nach vorne vorgelagerten Bereich ein elektrisches Feld generiert, wobei die Anregungselektrode (8) so angeordnet ist, dass diese das Anregungsfeld frontal nach vorne abstrahlt.

2. Mobiles Kommunikationsgerät nach Anspruch 1, **dadurch gekennzeichnet, dass** die Steuereinrichtung derart konfiguriert ist, dass die anwenderseitig abgewickelten Steuerbewegungen in der über das Display (2) abgebildeten Benutzeroberflächen ihren Niederschlag finden.

3. Mobiles Kommunikationsgerät nach Anspruch 1 oder 2, **dadurch gekennzeichnet, dass** die Benutzeroberfläche derart gestaltet ist, dass über die Quer- und Längsbewegung der Operationshand gegenüber dem Kommunikationsgerät (1) verschiedene Buttons selektiert werden können.

4. Mobiles Kommunikationsgerät nach wenigstens einem der Ansprüche 1 bis 3, **dadurch gekennzeichnet, dass** über die Tiefenbewegung verschiedene Menüfenster der Benutzeroberfläche oder unterschiedliche Menüfenster oder Frames selektiert werden können.

5. Mobiles Kommunikationsgerät nach wenigstens einem der Ansprüche 1 bis 4, **dadurch gekennzeichnet, dass** über die Z-Informationen der Zoomfaktor der über die Displayeinrichtung (2) visualisierten Benutzeroberfläche abgestimmt wird, und dass über die Längs- und Querbewegungen innerhalb eines Fensters oder eines Frames durch die Operationshand des Anwenders navigiert wird.

6. Mobiles Kommunikationsgerät nach wenigstens einem der Ansprüche 1 bis 5, **dadurch gekennzeichnet, dass** das Kommunikationsgerät (1) derart konfiguriert ist, dass anhand des Detektionsereignisses ein Selektionsbefehl hergeleitet wird, und dass der Selektionsbefehl durch eine Fingerbewegung, insbesondere ein Abkippen eines oder mehrerer Finger der Operationshand (R) in Richtung zum Display (2) hin generiert wird, oder dass an dem Gerät (1) eine Eingabestruktur vorgesehen ist, zur Bewerkstelligung einer manuellen Selektion durch entsprechende Betätigung der Eingabestruktur, wobei die Eingabestruktur als Tastenstruktur ausgeführt ist, die bei bestimmungsgemäßem Ergreifen des Kommunikationsgerätes (1) durch einen Finger der Greifhand, insbesondere den Daumen oder den Zeigefinger betätigbar ist.

7. Mobiles Kommunikationsgerät nach wenigstens einem der Ansprüche 1 bis 6, **dadurch gekennzeichnet, dass** das Gerät (1) in einem rückwärtigen Bereich eine Koppelungselektrode umfasst zur Einkoppelung eines Verschiebestromereignisses in die Greifhand (R) des Anwenders.

8. Mobiles Kommunikationsgerät nach wenigstens einem der Ansprüche 1 bis 7, **dadurch gekennzeichnet, dass** das Gerät (1) mit einer Lautsprechereinrichtung, insbesondere einem Piezo-Lautsprecher versehen ist zur Generierung eines akustischen Feedbacks während der Abwicklung der Eingabeoperationen, oder dass das Kommunikationsgerät (1) mit einer Einrichtung zur Generierung eines haptischen Feedbacks versehen ist, und/oder, dass das Kommunikationsgerät (1) mit einer Einrichtung zur Generierung eines optischen Feedbacks versehen ist.

9. Eingabeeinrichtung für ein mobiles einhändig greifbarbares Kommunikationsgerät mit einer Displayeinrichtung (2), die in das Kommunikationsgerät eingebunden ist zur Bereitstellung einer Bildwiedergabefläche, mit einer Steuereinrichtung zur Ansteuerung der Displayeinrichtung (2) derart, dass diese in einem Eingabemodus eine Eingabegraphik bereitstellt, die als solche die Abwicklung eines Eingabevorgangs unterstützt, und wobei die Eingabeeinrichtung (7) zur Abwicklung des Eingabevorgangs nach Maßgabe von Eingabehandlungen manueller Art dient, wobei die Eingabeeinrichtung (7) derart ausgebildet ist, dass in einem bei bestimmungsgemäßer Handhabung des Gerätes in einem der Displayeinrichtung (2) vorgelagerten Bereich eine Eingabezone bereitgestellt ist, innerhalb welcher Eingabeoperationen durch einen Anwender abgewickelt werden können indem der Anwender mit seiner freien Hand gegenüber der Gehäuseeinrichtung Steuerbewegungen durchführt ohne hierbei die Displayeinrichtung (2) oder das Kommunikationsgerät (1) mit dieser Hand zu berühren, wobei das Kommunikationsgerät (1) so gestaltet ist, dass die Länge und die Breite der zur Abwicklung der Eingabeoperationen über die Operationshand (R) vorgesehene Dimension der virtuellen Eingabeebene (E) größer ist als die Länge und die Breite der Displayeinrichtung (2),
**dadurch gekennzeichnet, dass**
die Eingabeeinrichtung (7) eine Elektrodenstruktur zur Detektion der Eingabeoperationen auf Grundlage feldelektrischer Wechselwirkungseffekte umfasst,
wobei die Eingabeeinrichtung eine erste, eine zweite und eine dritte Empfangselektrode (11, 12, 13) umfasst, und dass anhand von Unterschieden der an diesen Elektroden (11, 12, 13) anliegenden feldelektrischen Ereignisse die Position der Operationshand (R) und/oder die Quer-, Längs- und/oder Tiefenbewegung der Operationshand (R) gegenüber dem Kommunikationsgerät (1) detektiert wird, und dass die Eingabeeinrichtung eine Anregungselektrode (8) umfasst, die als Sendeelektrode fungiert und in einem dem Kommunikationsgerät (1) nach vorne vorgelagerten Bereich ein elektrisches Feld generiert, wobei die Anregungselektrode (8) so angeordnet ist, dass diese das Anregungsfeld frontal nach vorne abstrahlt.

10. Eingabeeinrichtung nach Anspruch 9, wobei eine dünne Leiterplattenstruktur (20) mit darauf ausgebildeten Elektrodenstrukturen (8-11) vorgesehen ist, auf welcher eine ASIC-Schaltung (AC) angeordnet ist, zur Generierung der Steuersignale auf Grundlage der über die Elektrodeneinrichtungen delektierten Näherungseffekte.

11. Verfahren zur Bewerkstelligung eines Eingabevorganges bei der Verwendung eines mobiles Kommunikationsgerätes gemäß einem der vorhergehenden Ansprüche 1-8,
wobei ein Eingabevorgang abgewickelt wird indem in einem bei bestimmungsgemäßer Handhabung des Gerätes in einem der Displayeinrichtung vorgelagerten Bereich auf feldelektrischem Wege eine Eingabezone bereitgestellt wird, innerhalb welcher Eingabeoperationen durch einen Anwender abgewickelt werden indem der Anwender mit seiner freien Hand gegenüber der Gehäuseeinrichtung Steuerbewegungen durchführt ohne hierbei die Displayeinrichtung oder das Kommunikationsgerät mit dieser Hand zu berühren.

## Claims

1. A mobile communication device, comprising:
a housing device formed such that it is seizable with one hand,
a display device (2) integrated in the housing device for providing an image reproduction surface,
a control device for driving the display device (2) such that, in an input mode, it provides an input graphic, which supports the execution of an input event, and
an input device (7) for executing the input event in accordance with manual input actions, wherein the input device (7) is formed such that during intended handling of the device an input zone is provided in a region located in front of the display device (2), within which input operations may be executed by a user in that the user executes control movements toward the housing device with his free hand without touching the display device (2) or the communication device (1) with this hand,
wherein the communication device (1) is formed such that the length and the width of the dimension of the virtual input plane (E) provided for executing the input operations by means of the operating hand (R) is greater than the length and the width of the display device (2),
**characterized in that** the input device (7) comprises an electrode structure for detecting the input operations on the basis of field-electric interaction effects,
wherein the input device comprises a first, a second and a third receiving electrode (11, 12, 13), and **in that** by means of differences of the field-electric events present at these electrodes (11, 12, 13) the position of the operating hand (R) and/or the transverse, longitudinal and/or depth movement of the operating hand (R) toward the communication device (1) are detected, and **in that** the input device comprises an excitation electrode (8), which serves as a transmitting electrode and generates an electric field in a forward-facing region located in front of the communication device (1), wherein the excitation electrode (8) is arranged such that it emits the excitation field frontally forward-facing.

2. The mobile communication device of claim 1, **characterized in that** the control device is configured such that the control movements executed by the user are represented in the user interface formed by means of the display (2).

3. The mobile communication device of claim 1 or 2, **characterized in that** the user interface is formed such that by means of the transverse and longitudinal movement of the operating hand toward the communication device (1) different buttons may be selected.

4. The mobile communication device of at least one of claims 1 to 3, **characterized in that** different menu windows of the user interface or different menu windows or frames may be selected by means of the depth movement.

5. The mobile communication device of at least one of claims 1 to 4, **characterized in that** by means of the Z information the zoom factor of the user interface visualized by means of the display device (2) is adjusted, and that navigation is carried out by means of the longitudinal and transverse movements by the operating hand of the user within a window or a frame.

6. The mobile communication device of at least one of claims 1 to 5, **characterized in that** the communication device (1) is configured such that a selection instruction is derived by means of the detection event, and that the selection instruction is generated by a finger movement, particularly by tilting one or more fingers of the operating hand (R) in the direction of the display (2), or that an input structure is provided at the device (1) for carrying out a manual selection by means of respective actuation of the input structure, wherein the input structure is implemented as a keyboard structure, which, during intended clasping of the communication device (1), may be actuated by a finger of the clasping hand, particularly by the thumb or by the index finger.

7. The mobile communication device of at least one of claims 1 to 6, **characterized in that** the device (1) comprises a coupling electrode in a rearward region for coupling a shift current event into the clasping hand (R) of the user.

8. The mobile communication device of at least one of claims 1 to 7, **characterized in that** the device (1) is provided with a loudspeaker device, particularly a piezo loudspeaker, for generating an acoustic feedback during the execution of the input operations, or that the communication device (1) is provided with a device for generating a haptic feedback, and/or, that the communication device (1) is provided with a device for generating an optical feedback.

9. An input device for a mobile communication device that is seizable with one hand, comprising a display device (2), which is integrated into the communication device for providing an image reproduction surface, comprising a control device for driving the display device (2) such that in an input mode it provides an input graphic which supports the execution of an input event, and wherein the input device (7) serves for executing the input event in accordance with manual input actions, wherein the input device (7) is formed such that during intended handling of the device in a region located in front of the display device (2) an input zone is provided, within which input operations may be executed by a user in that the user carries out control movements with his free hand toward the housing device without touching the display device (2) or the communication device (1) with this hand, wherein the communication device (1) is formed such that the length and the width of the dimension of the virtual input plane (E) intended for executing the input operations by means of the operating hand (R) is greater than the length and the width of the display device (2),
**characterized in that**
the input device (7) comprises an electrode structure for detecting the input operations on the basis of field-electric interaction effects,
wherein the input device comprises a first, a second and a third receiving electrode (11, 12, 13), and that by means of differences of field-electric events present at these electrodes (11, 12, 13) the position of the operating hand (R) and/or the transverse, longitudinal and/or depth movement of the operating hand (R) toward the communication device (1) is detected, and that the input device comprises an excitation electrode (8), which functions as a transmitting electrode and generates an electric field in a forward-facing region located in front of the communication device (1), wherein the excitation electrode (8) is arranged such that it emits the excitation field frontally forward-facing.

10. The input device of claim 9, wherein a thin printed circuit board structure (20) comprising electrode structures (8-11) formed thereon is provided, on which an ASIC-circuit (AC) is arranged for generating the control signals on the basis of the approximation effects detected by means of the electrode devices.

11. A method for accomplishing an input event during the use of a mobile communication device according to one of the preceding claims 1-8,
wherein an input event is executed in that during intended handling of the device an input zone is provided in a field-electric manner in a region located in front of the display device, within which input operations are executed by a user in that the user carries out control movements toward the housing device with his free hand without touching the display device or the communication device with this hand.

## Revendications

1. Appareil de communication mobile avec :
un dispositif de boîtier qui est conçu de façon à pouvant être manipulé d'une seule main,
un dispositif d'affichage (2) qui est intégré dans le dispositif de boîtier pour la mise à disposition d'une surface de reproduction d'image,
un dispositif de commande pour la commande du dispositif d'affichage (2), de façon à ce que celui-ci mette à disposition, dans un mode d'entrée, un graphisme d'entrée qui supporte, en tant que tel, le déroulement d'un processus d'entrée et
un dispositif d'entrée (7) pour le déroulement du processus d'entrée selon des actions d'entrée manuelles, le dispositif d'entrée (7) étant conçu de façon à ce que, lors d'une manipulation appropriée de l'appareil, dans une zone en amont du dispositif d'affichage (2), une zone d'entrée soit mise à disposition, à l'intérieur de laquelle des opérations d'entrée puissent être effectuée par un utilisateur grâce au fait que l'utilisateur effectue, avec sa main libre par rapport au dispositif de boîtier, des mouvements de commande sans toucher le dispositif d'affichage (2) ou l'appareil de communication (1) avec cette main,
l'appareil de communication (1) étant conçu de façon à ce que la longueur et la largeur des dimensions du plan d'entrée virtuel (E) prévues pour le déroulement des opérations d'entrée par l'intermédiaire de la main d'un opérateur (R) soient supérieures à la longueur et à la largeur du dispositif d'affichage (2),
**caractérisé en ce que** le dispositif d'entrée (7) comprend une structure d'électrode pour la détection des opérations d'entrée sur la base d'effets d'interaction d'un champ électrique,
le dispositif d'entrée comprenant une première, une deuxième et une troisième électrodes de réception (11, 12, 13) et **en ce que**, les différences entre les événements de champ électrique survenant au niveau de ces électrodes (11, 12, 13) permettent de détecter la position de la main de l'opérateur (R) et/ou le mouvement transversale, longitudinal et/ou en profondeur de la main de l'opérateur (R) par rapport à l'appareil de communication (1) et **en ce que** le dispositif d'entrée comprend une électrode d'excitation (8) qui fonctionne comme une électrode d'émission et génère, dans une zone disposée vers l'avant de l'appareil de communication (1), un champ électrique, l'électrode d'excitation (8) étant disposée de façon à émettre le champ d'excitation vers l'avant.

2. Appareil de communication mobile selon la revendication 1, **caractérisé en ce que** le dispositif de commande est conçu de façon à ce que les mouvements de commande effectués côté utilisateur sont représentés dans les interfaces utilisateurs représentées par l'intermédiaire de l'affichage (2).

3. Appareil de communication mobile selon la revendication 1 ou 2, **caractérisé en ce que** l'interface utilisateur est conçue de façon à ce que le mouvement transversal et longitudinal de la main de l'opérateur par rapport à l'appareil de communication (1) permette de sélectionner différents boutons.

4. Appareil de communication mobile selon au moins l'une des revendications 1 à 3, **caractérisé en ce que** le mouvement en profondeur permet de sélectionner différentes fenêtres de menu de l'interface utilisateur ou différentes fenêtres de menu ou cadres.

5. Appareil de communication mobile selon au moins l'une des revendications 1 à 4, **caractérisé en ce que** les informations Z permettent de régler le facteur de zoom de l'interface d'utilisateur visualisée par l'intermédiaire du dispositif d'affichage (2) et **en ce que** les mouvements longitudinaux et transversaux permettent de naviguer à l'intérieur d'une fenêtre ou d'un cadre par l'intermédiaire de la main de l'opérateur.

6. Appareil de communication mobile selon au moins l'une des revendications 1 à 5, **caractérisé en ce que** l'appareil de communication (1) est conçu de façon à ce que, à l'aide de l'événement de détection, une instruction de sélection soit déduite et à ce que l'instruction de sélection soit générée par un mouvement du doigt, plus particulièrement un basculement d'un ou de plusieurs doigts de la main de l'opérateur (R) en direction de l'affichage (2), ou **en ce que** sur l'appareil (1), une structure d'entrée est prévue pour la réalisation d'une sélection manuelle par un actionnement correspondant de la structure d'entrée, la structure d'entrée étant conçue comme une structure à touches, qui peut être actionnée, lors de la manipulation appropriée de l'appareil de communication (1) par un doigt de la main de préhension, plus particulièrement du pouce ou de l'index.

7. Appareil de communication mobile selon au moins l'une des revendications 1 à 6, **caractérisé en ce que** l'appareil (1) comprend, dans une partie arrière, une électrode de couplage pour l'introduction d'un événement de courant de déplacement dans la main de préhension (R) de l'utilisateur.

8. Appareil de communication mobile selon au moins l'une des revendications 1 à 7, **caractérisé en ce que** l'appareil (1) est muni d'un dispositif à haut-parleurs, plus particulièrement d'un haut-parleur piézoélectrique pour la production d'un retour acoustique pendant la réalisation des opérations d'entrée ou **en ce que** l'appareil de communication (1) est muni d'un dispositif pour la production d'un retour haptique et/ou **en ce que** l'appareil de communication (1) est muni d'un dispositif pour la production d'un retour optique.

9. Dispositif d'entrée pour un appareil de communication pouvant être saisi d'une seule main, avec un dispositif d'affichage (2), qui est intégré dans l'appareil de communication pour la mise à disposition d'une surface de reproduction d'image, avec un dispositif de commande pour la commande du dispositif d'affichage (2) de façon à ce que celui-ci mette à disposition, dans un mode d'entrée, un graphisme d'entrée qui supporte, en tant que tel, le déroulement d'un processus d'entrée et dispositif d'entrée (7) permettant le déroulement du processus d'entrée selon des actions d'entrée manuelles, le dispositif d'entrée (7) étant conçu de façon à ce que, lors d'une manipulation appropriée de l'appareil, dans une zone en amont du dispositif d'affichage (2), une zone d'entrée soit mise à disposition, à l'intérieur de laquelle des opérations d'entrée puissent être effectuée par un utilisateur grâce au fait que l'utilisateur effectue, avec sa main libre par rapport au dispositif de boîtier, des mouvements de commande sans toucher le dispositif d'affichage (2) ou l'appareil de communication (1) avec cette main, l'appareil de communication (1) étant conçu de façon à ce que la longueur et la largeur des dimensions du plan d'entrée virtuel (E) prévues pour le déroulement des opérations d'entrée par l'intermédiaire de la main d'un opérateur (R) soient supérieures à la longueur et à la largeur du dispositif d'affichage (2),
**caractérisé en ce que**
le dispositif d'entrée (7) comprend une structure d'électrode pour la détection des opérations d'entrée sur la base d'effets d'interaction d'un champ électrique,
le dispositif d'entrée comprenant une première, une deuxième et une troisième électrodes de réception (11, 12, 13) et **en ce que** les différences entre les événements de champ électrique survenant au niveau de ces électrodes (11, 12, 13) permettent de détecter la position de la main de l'opérateur (R) et/ou le mouvement transversale, longitudinal et/ou en profondeur de la main de l'opérateur (R) par rapport à l'appareil de communication (1) et **en ce que** le dispositif d'entrée comprend une électrode d'excitation (8) qui fonctionne comme une électrode d'émission et génère, dans une zone disposée vers l'avant de l'appareil de communication (1), un champ électrique, l'électrode d'excitation (8) étant disposée de façon à émettre le champ d'excitation vers l'avant.

10. Dispositif d'entrée selon la revendication 9, une mince structure de circuit imprimé (20) étant prévue, avec des structures d'électrodes (8 à 11) réalisées dessus, sur laquelle est disposé un circuit ASIC (AC) pour la production des signaux de commande sur la base des effets de proximité détectés par les dispositifs à électrodes.

11. Procédé de réalisation d'un processus d'entrée lors de l'utilisation d'un appareil de communication mobile selon l'une des revendications précédentes 1 à 8,
un processus d'entrée étant réalisé grâce au fait que, lors d'une manipulation appropriée de l'appareil, dans une zone en amont du dispositif d'affichage, une zone d'entrée soit mise à disposition, à l'aide d'un champ électrique, à l'intérieur de laquelle des opérations d'entrée peuvent être effectuée par un utilisateur grâce au fait que l'utilisateur effectue, avec sa main libre par rapport au dispositif de boîtier, des mouvements de commande sans toucher le dispositif d'affichage ou l'appareil de communication avec cette main.
